# EUROPEAN PATENT APPLICATION

(11) **EP 2 738 407 A1**
(43) Date of publication of application: **04.06.2014**
(21) Application number: 12817162.6
(22) Date of filing: 10.07.2012
(51) Int. Cl.: F16C 33/78, F16C 19/38, F16C 33/80

(54) **SEALED ROLLER BEARING**

(30) Priority: 27.07.2011 JP 2011164286
(71) Applicant: NTN Corporation, Osaka-shi, Osaka 550-0003 (JP)
(72) Inventor: TOYODA Tsukasa, Kuwana-shi Mie 511-0811 (JP); SHIMIZU Yasuhiro, Kuwana-shi Mie 511-0811 (JP)
(74) Representative: Grünecker, Kinkeldey, Stockmair & Schwanhäusser
(86) International application number: PCT/JP2012/067574
(87) International publication number: WO 2013/015108

(57) **Abstract**

In a sealed rolling bearing used in an environment where a large amount of water is splashed and the internal pressure of the bearing becomes negative, it is an object of the present invention to secure sufficient seal performance without increasing manufacturing costs and complicating the bearing structure. The ratio of the difference between the outer diameter (D₁) of a seal sliding contact surface (1a) of an inner race (1) and the inner diameter (d) of a seal lip (12a) of an elastic seal member (12) in its natural state to the diameter (Do) of a roll neck portion (shaft) A on which the inner race (1) is fitted is in the range of 0.27 to 0.40 %. As a result thereof, the amount of frictional heat generation of the seal lip (12a) is decreased and adequate pressing force is applied to the seal lip (12a) as well, compared to conventional bearings in which the above ratio exceeds 0.40 % during use, thus enabling to secure more excellent seal performance than conventional seal performance without providing an additional mechanism, such as a vent to a contact seal.

## Description

### TECHNICAL FIELD

The present invention relates to a sealed rolling bearing including contact seals fixed to an outer race of the bearing and each having a seal lip pressed tightly against a seal sliding contact surface of an inner race of the bearing, thereby sealing the interior space of the bearing.

### BACKGROUND ART

As rolling bearings (bearings for a roll neck) used to support a roll neck portion of a steel rolling mill, which are used in situations where a large amount of water such as roll cooling water or emulsion including rolling lubricating oil scattered therein is splashed, sealed rolling bearings are widely used which include contact seals fixed to an outer race of the bearing and each having a seal lip pressed tightly against a seal sliding contact surface of an inner race of the bearing. The seal lips thus seal the interior space of the bearing between the inner race and the outer race so as to prevent water from leaking into the interior space of the bearing.

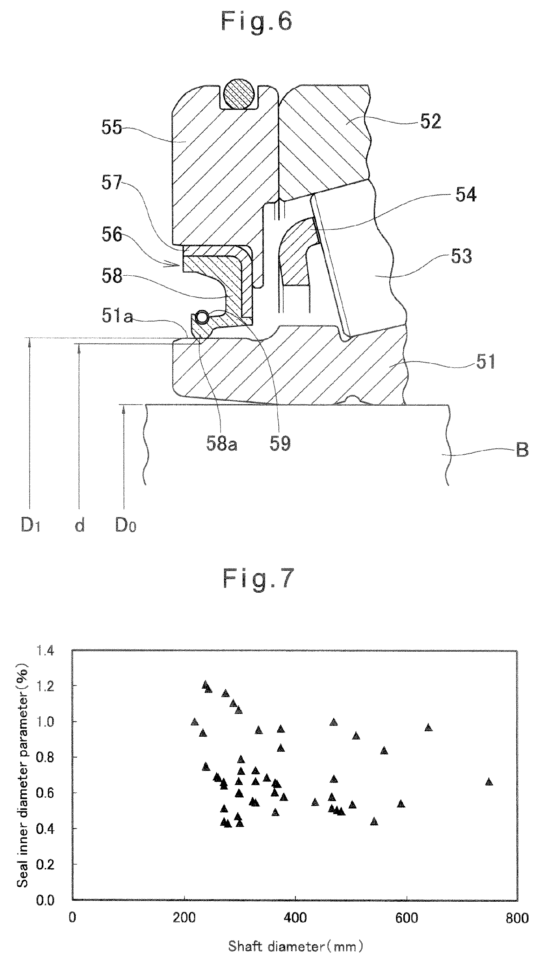

Such a sealed rolling bearing is illustrated in Fig. 6 as one example. This sealed rolling bearing is a double-row tapered roller bearing including an inner race 51 fitted on the outer periphery of a shaft B, an outer race 52, and tapered rollers 53 retained by retainers 54. This bearing further includes seal cases 55 pressed against the respective end surfaces of the outer race 52, and contact seals 56 fitted to the inner peripheries of the respective seal cases 55. The contact seals 56 each include an annular metal core 57 and an elastic seal member 58 attached to the metal core. The elastic seal member 58 includes a seal lip 58a at the inner peripheral portion thereof which is pressed tightly against a seal sliding contact surface 51a provided on the outer peripheral surface of the inner race 51. Also, an annular coil spring (spring member) 59 is attached to the elastic seal member 58, pressing the seal lip 58a against the seal sliding contact surface 51a.

However, especially in a bearing for a roll neck, since the internal pressure of the bearing tends to become negative due to temperature changes of the bearing caused by the bearing being rotated on and off repeatedly, even if a sealed rolling bearing configured as described above is used as a bearing for a roll neck, water may be sucked into the bearing from outside the seal lips, thus causing service life of the bearing to be shortened.

To avoid this problem, in conventional sealed rolling bearings, contact seals were used having seal lips whose inner diameter is small in an natural state compared to the outer diameter of the seal sliding contact surface so as to increase pressing force of the seal lips due to the difference between the inner diameter of the seal lips in a natural state and the outer diameter of the seal sliding contact surface, and thus enhance seal performance. Namely, if the seal lip inner diameter in its natural state (indicated by the letter "d" in Fig. 6) is evaluated by the parameter (D₁ - d)/ D₀ (hereinafter referred to as the seal inner diameter parameter), where D₁ is the outer diameter of the seal sliding contact surface, D₀ is the diameter of the shaft on which the inner race is fitted, as illustrated in Fig. 7, the inner diameter d of the seal lip is normally set to be in the range where the seal inner diameter parameter exceeds 0.4 %, and in order to further enhance seal performance, the seal lip inner diameter d is shortened such that the maximum value of the seal inner diameter parameter reaches approximately 1.2 %. However, it is difficult in many cases to enhance seal performance sufficiently even if the inner diameter of the seal lip is shortened so as to increase pressing force of the seal lip as described above.

In another conventional arrangement for preventing entry of water into the bearing, one of the contact seals is provided with a vent configured to open and close in accordance with the difference in pressure between the interior and exterior of the bearing so as to prevent the internal pressure of the bearing from becoming negative (see the below-identified Patent document 1).

### PRIOR ART DOCUMENT(S)

### PATENT DOCUMENT(S)

Patent document 1: Japanese Patent No. 4240917.

### SUMMARY OF THE INVENTION

### PROBLEMS TO BE SOLVED BY THE INVENTION

However, in the arrangement disclosed in Patent document 1, it is necessary to provide a vent hole in a contact seal and to attach a valve member to the vent hole. Therefore, manufacturing costs are increased, and a lot of time is also needed for maintenance due to its complicated structure. The valve member, only configured to open and close in accordance with the difference of pressure between the interior and exterior spaces of a bearing, may cause water to flow into the bearing as well together with air flowing into the bearing through the vent hole from outside the bearing when the internal pressure of the bearing becomes low.

In a sealed rolling bearing used in an environment where a large amount of water is splashed and the internal pressure of the bearing becomes negative, it is an object of the present invention to secure sufficient seal performance without increasing manufacturing costs and complicating the bearing structure.

### MEANS FOR SOLVING THE PROBLEMS

In order to achieve this object, the present invention provides a sealed rolling bearing comprising: an outer race; an inner race; and contact seals fixed to the outer race, the contact seals each including: an annular elastic seal member; and a seal lip formed on an inner periphery of the elastic seal member, wherein the seal lip is pressed tightly against a seal sliding contact surface provided on the inner race such that a bearing space defined between the inner race and the outer race is sealed, characterized in that a ratio of a difference between an outer diameter of the seal sliding contact surface and an inner diameter of the seal lip in a natural state to a diameter of a shaft on which the inner race is fitted is in a range of 0.27 to 0.40 %.

The upper limit value of the ratio (the seal inner diameter parameter (D₁ - d)/ Do) of the difference between the outer diameter D₁ of the seal sliding contact surface and the inner diameter d of the seal lip in its natural state to the diameter D₀ of the shaft on which the inner races are fitted is set as described below. Namely, after the inventors of the present invention researched on the phenomenon of water leaking into the bearing many times, they confirmed that when the seal inner diameter parameter becomes large within the ordinary use parameter range, while pressing force of the seal lip is increased, the amount of frictional heat generation of the seal lip is increased as well, thus causing water being outwardly of and being in the vicinity of the seal lip to evaporate so that water is likely to leak into the bearing. Finally, the inventors discovered that if this parameter is 0.40 % or less, which is not within the ordinary use parameter range, the amount of frictional heat generation of the seal lip is decreased as well though pressing force of the seal lip is decreased, thus enabling to enhance seal performance. Therefore, the upper limit value of this parameter is set to be 0.40 %.

The lower limit value of the above seal inner diameter parameter determined at 0.27 % due to the following reason. Namely, if this parameter is too small, pressing force of the seal lip is remarkably decreased, so as to deteriorate seal performance. However, if the parameter is 0.27 % or more (and 0.40 % or less), adequate pressing force of the seal lip can be obtained, thus enabling to secure more excellent seal performance than conventional sealed rolling bearings.

According to the configuration as described above, it is possible to secure sufficient seal performance without providing an additional mechanism, such as a vent to the contact seal even in an environment where a large amount of water is splashed and thus the internal pressure of the bearing becomes negative.

In the above configuration, if the contact seals each include an annular spring member attached to the elastic seal member and configured to press the seal lip against the seal sliding contact surface, it is preferable that the elastic seal member is configured such that a waist portion through which the root of a radially outwardly extending rising portion is connected to the portion to which the spring member is attached has a minimum thickness larger than its length. If the waist portion of the elastic seal member has higher rigidity due to the above configuration, the elastic seal member is less likely to deform greatly when the internal pressure of the bearing becomes negative. As a result thereof, it is possible to prevent pressing force of the seal lip from being increased and thus enhance seal performance further. Since the pressing force of the seal lip is kept low, frictional heat generated is also kept low.

It is also possible to enhance seal performance due to the following configuration. Namely, the elastic seal member of the contact seal is provided with a wall portion which defines a labyrinth gap outwardly of the seal lip and between the seal sliding contact surface of the inner race and the wall portion, so that water is less likely to be splashed directly on the seal lip from outside the bearing. In addition, if the outer surface of the wall portion of the elastic seal member is stair-shaped, etc. so as to extend obliquely outwardly toward the seal sliding contact surface of the inner race, water is likely to flow outwardly of the bearing along the outer surface of the wall portion, thus enabling to enhance seal performance further. Furthermore, if the wall portion of the elastic seal member is made at least partially water-repellent, water is less likely to adhere to the water-repellent portion, thus enabling to obtain much more excellent seal performance of the wall portion.

### EFFECTS OF THE INVENTION

As described above, in the sealed rolling bearing of the present invention, the ratio of the difference between the outer diameter of the seal sliding contact surface and the inner diameter of the seal lip in its natural state to the diameter of the shaft on which the inner races are fitted is set to be in the range of 0.27 to 0.40 % that is not within the ordinary use parameter range, so as to decrease the amount of frictional heat generation of the seal lip and to apply adequate pressing force to the seal lip. Therefore, it is possible to secure more excellent seal performance than conventional sealed rolling bearings without increasing manufacturing costs and complicating the bearing structure.

### BRIEF DESCRIPTION OF THE DRAWINGS

Fig. 1 is a front sectional view of a sealed rolling bearing according to an embodiment of the present invention.
Fig. 2 is an enlarged sectional view of one end portion of the rolling bearing in Fig. 1.
Fig. 3 is an enlarged sectional view of the elastic seal member of the contact seal in Fig. 2.
Fig. 4 is a graph illustrating the experimental result of seal performance of the rolling bearing in Fig. 1.
Figs. 5(a) to 5(c) are enlarged sectional views each illustrating an elastic seal member of the contact seal which differs in shape from the seal member of the embodiment.
Fig. 6 is an enlarged sectional view of one end portion of a conventional sealed rolling bearing.
Fig. 7 is graph illustrating use range of the seal inner diameter parameter of the conventional sealed rolling bearing.

### BEST MODE FOR CARRYING OUT THE INVENTION

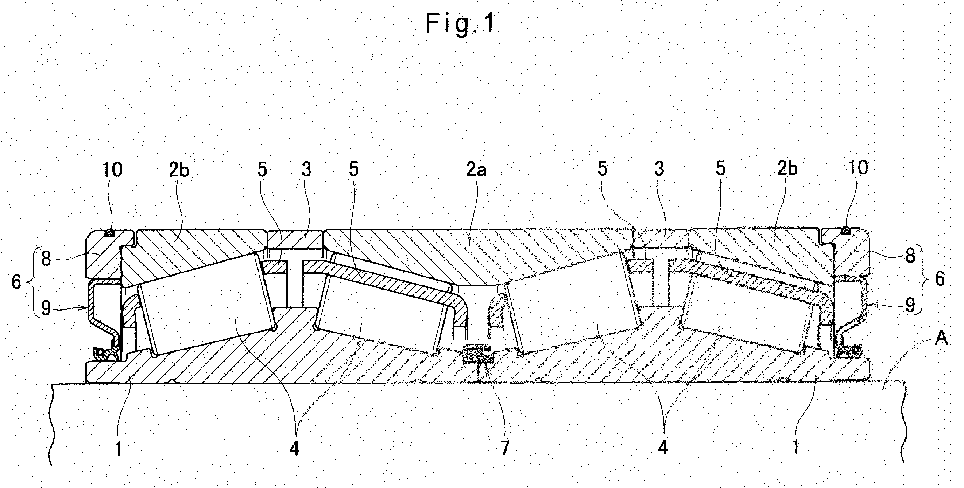

The embodiment of the present invention is now described with reference to Figs. 1 through 5. As illustrated in Fig. 1, this sealed rolling bearing is a four-row tapered roller bearing supporting a roll neck portion (shaft) A of a steel rolling mill. The bearing includes right and left two inner races 1 each having two raceways, a central outer race 2a having two raceways, and two outer races 2b each having a raceway and arranged on both sides of the outer race 2a through spacers 3, and tapered rollers 4 arranged in four rows between the inner races 1 and the outer races 2a and 2b and retained by retainers 5. The interior space of the bearing between the inner races 1 and the outer races 2a, 2b is sealed by side seal assemblies 6 arranged at both ends of the bearing and an intermediate seal assembly 7 arranged in the center of the bearing.

The side seal assemblies 6 each include an annular seal case 8 pressed against the outer end surface of the outer race 2b, and a contact seal 9 fixed to the inner peripheral surface of the seal case 8. An O-ring 10, which seals the space between a bearing box (not shown) and the seal case 8, is mounted on the outer peripheral surface of the seal case 8.

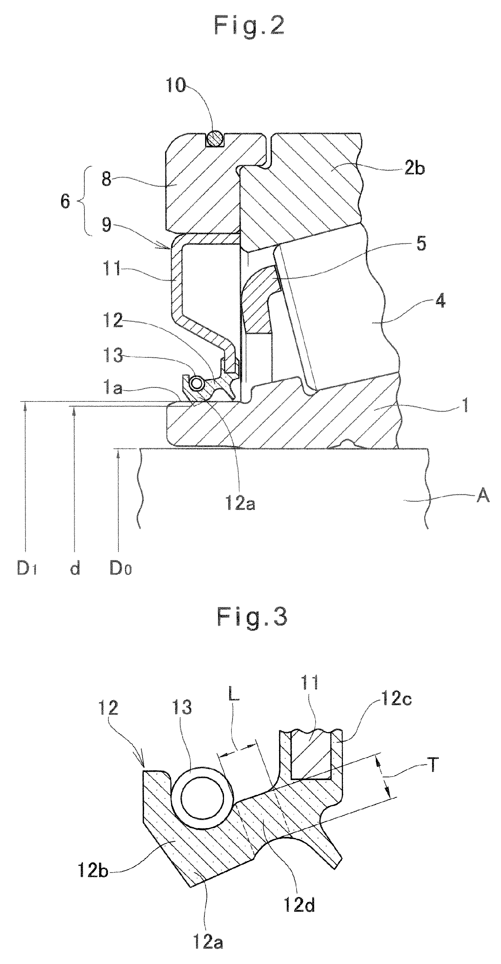

As illustrated in Fig. 2, the contact seals 9 of the side seal assemblies 6 each include an annular metal core 11 press-fitted into the inner periphery of the seal case 8 and an elastic seal member 12 made of fluororubber and attached to the inner periphery of the metal core. The elastic seal member 12 includes a seal lip 12a at the inner peripheral portion thereof which is pressed tightly against a seal sliding contact surface 1a provided on the outer peripheral surface of an outwardly extending portion of the inner race 1. Also, an annular coil spring (spring member) 13 is attached to the elastic seal member 12, pressing the seal lip 12a against the seal sliding contact surface 1a.

The contact seal 9 is S-shaped as a whole such that the metal core 11 is kept in abutment with the end surface of the outer race 2b. As a result thereof, it is possible to shorten the axial length of the seal case 8 compared to that of the conventional seal case illustrated in Fig. 6 without the metal core 11 and the retainer 5 interfering with each other and thus to obtain an axially compact rolling bearing as a whole.

The seal lip of the elastic seal member 12 has such an inner diameter d that the ratio of the difference between the outer diameter D₁ of the seal sliding contact surface 1a and the inner diameter d of the seal lip 12a in its natural state to the diameter D₀ of the roll neck portion A, on which the inner races 1 are fitted, i.e. the seal inner diameter parameter (D₁ - d)/ D₀ is in the range of 0.27 to 0.40 %.

As illustrated in Fig. 3, the elastic seal member 12 has an end portion 12b which includes the seal lip 12a and to which the coil spring 13 is attached, a radially outwardly extending rising portion 12c, and a waist portion 12d (portion between the two dashed lines of Fig. 3) through which the root of the rising portion 12c is connected to the end portion 12b. The waist portion 12d has a minimum thickness T larger than its length L. As a result thereof, the waist portion 12d has high rigidity, and thus the elastic seal member 12 is less likely to deform greatly when the internal pressure of the bearing becomes negative, so as to prevent pressing force of the seal lip 12a from being increased. Since the pressing force of the seal lip 12a is kept low, frictional heat generated is also kept low.

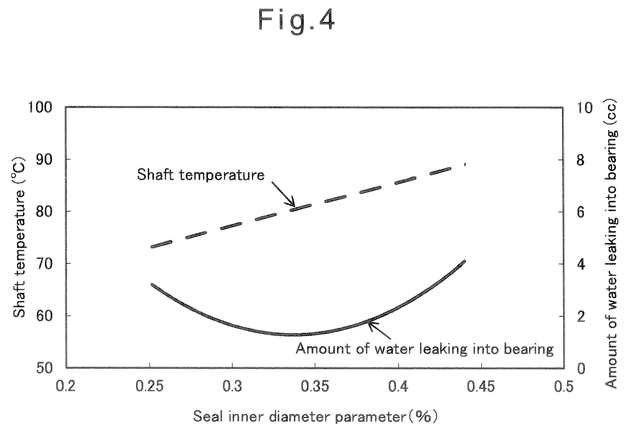

An experiment performed to confirm seal performance of the sealed rolling bearing of this embodiment is now described. In the experiment, different kinds of test bearings were prepared which are basically identical in structure to the bearing of the embodiment, and of which only the inner diameters of the seal lips of the side seal assemblies in their natural state are different from each other. With each of the test bearings fitted on a hollow shaft as the roll neck portion of the embodiment, the hollow shaft was rotated on and off repeatedly for a predetermined period of time while splashing water on the side seal assemblies. Then, measurements were made of the temperature of the inner peripheral surface of the hollow shaft at its portion axially corresponding to the seal lip, and the amount of water leaking into the bearing. The measurement results are illustrated by the trend lines in Fig. 4.

As illustrated in Fig. 4, the larger the seal inner diameter parameter (D₁ - d)/ D₀ is (namely, the smaller the seal lip inner diameter d is), the higher the shaft temperature is, which suggests that the amount of frictional heat generation of the seal lip also increases with an increase in the seal inner diameter parameter. But this parameter is not proportional to the water leakage amount. In case this parameter is in the range of the embodiment, namely in the range of 0.27 to 0.40 %, the water leakage amount is small compared to the ordinary use parameter range, which exceeds 0.40 %.

It was confirmed from the above experimental results that the sealed rolling bearing of the embodiment can secure more excellent seal performance than conventional sealed rolling bearings in an environment where a large amount of water is splashed and the internal pressure of the bearing becomes negative, without increasing manufacturing costs and complicating the bearing structure.

For each of the test bearings used in the experiment of which the seal inner diameter parameters are within the range of the embodiment, pressing force of the seal lip was obtained by analysis. The analysis result shows that the pressing force per unit length of e the outer peripheral length of the hollow shaft was in the range of 0.056 to 0.100 N/mm. In other words, if the bearing is designed such that pressing force of the seal lip is within the range described above, it is estimated that more excellent seal performance than conventional sealed rolling bearings can be obtained.

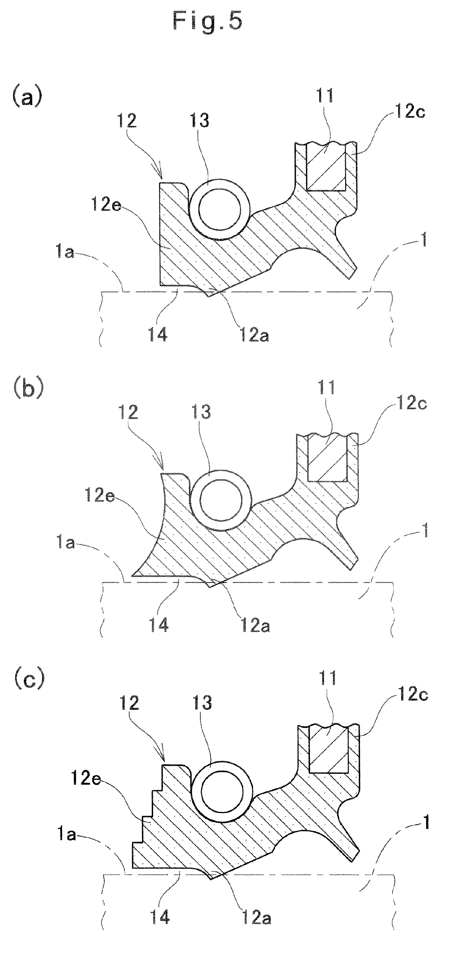

Figs. 5(a) to 5(c) illustrate elastic seal members 12 of the contact seal 9 which differ in shape from the seal member 12 of the embodiment and from each other. The elastic seal member 12 of Fig. 5(a) is provided with a wall portion 12e which defines a labyrinth gap 14 outwardly of the seal lip 12a and between the seal sliding contact surface 1a of the inner race 1 and the wall portion 12e, so that water is less likely to be splashed directly on the seal lip 12a from outside the bearing. Figs. 5(b) and 5(c) illustrate further different examples where the outer surface of the wall portion 12e of the elastic seal member 12 illustrated in Fig. 5(a) is concave circular arc-shaped (Fig. 5(b)) or stair-shaped (Fig. 5(c)) so as to extend obliquely outwardly toward the seal sliding contact surface 1a of the inner race 1.

If any of the elastic members 12 illustrated in Figs. 5(a) to 5(c) is used, it is possible to obtain more excellent seal performance due to the labyrinth effect of the wall portion 12e than that of the elastic seal member 12 illustrated in Figs. 1 to 3. Due to the structure of the wall portion 12e as each illustrated in Fig. 5(b), 5(c), water is likely to flow outwardly of the bearing along the outer surface of the wall portion 12e, thus enabling to obtain more excellent seal performance than that of the elastic member 12 illustrated in Fig. 5(a). Furthermore, if the wall portion 12e is made at least partially water-repellent (no such water-repellent portion is illustrated in the drawings), water is less likely to adhere to the water-repellent portion, thus enabling to obtain much more excellent seal performance of the wall portion 12e.

Though the sealed rolling bearing of the embodiment described above is a four-row tapered roller bearing, the present invention can apply to other kinds of sealed rolling bearings such as a ball bearing, a roller bearing, and so on.

### DESCRIPTION OF REFERENCE NUMERALS

1: inner race
1a: seal sliding contact surface
2a, 2b: outer race
4: tapered roller
5: retainer
6: side seal assembly
8: seal case
9: contact seal
11: metal core
12: elastic seal member
12a: seal lip
12b: end portion
12c: rising portion
12d: waist portion
12e: wall portion
13: coil spring
14: labyrinth gap
A: roll neck portion

## Claims

1. A sealed rolling bearing comprising:
an outer race;
an inner race; and
contact seals fixed to the outer race,
the contact seals each including:
an annular elastic seal member; and
a seal lip formed on an inner periphery of the elastic seal member,
wherein the seal lip is pressed tightly against a seal sliding contact surface provided on the inner race such that a bearing space defined between the inner race and the outer race is sealed,
**characterized in that** a ratio of a difference between an outer diameter of the seal sliding contact surface and an inner diameter of the seal lip in a natural state to a diameter of a shaft on which the inner race is fitted is in a range of 0.27 to 0.40 %.

2. The sealed rolling bearing according to claim 1, wherein the contact seals each include an annular spring member attached to the elastic seal member and configured to press the seal lip against the seal sliding contact surface, wherein the elastic seal member includes a radially outwardly extending rising portion, and a waist portion through which a root of the rising portion is connected to a portion to which the spring member is attached, and wherein the waist portion has a minimum thickness larger than a length of the waist portion.

3. The sealed rolling bearing according to claim 1 or 2, wherein the elastic seal member of each of the contact seals is provided with a wall portion which defines a labyrinth gap outwardly of the seal lip and between the seal sliding contact surface of the inner race and the wall portion.

4. The sealed rolling bearing according to claim 3, wherein an outer surface of the wall portion of the elastic seal member is formed so as to extend obliquely outwardly toward the seal sliding contact surface of the inner race.

5. The sealed rolling bearing according to claim 4, wherein the outer surface of the wall portion of the elastic seal member is stair-shaped.

6. The sealed rolling bearing according to any of claims 3 to 5, wherein the wall portion of the elastic seal member is at least partially water-repellent.
